# EUROPÄISCHE PATENTSCHRIFT

(11) **EP 1 165 657 B1**
(45) Veröffentlichungstag und Bekanntmachung des Hinweises auf die Patenterteilung: **11.08.2004**
(21) Anmeldenummer: 00901607.2
(22) Anmeldetag: 31.01.2000
(51) Int. Cl.: C08G 65/26, B01J 27/26, C07J 9/00, C07J 41/00

(54) **DOPPELMETALLCYANID-KATALYSATOREN FÜR DIE HERSTELLUNG VON POLYETHERPOLYOLEN**
DOUBLE METAL CYANIDE CATALYSTS FOR PRODUCING POLYETHER POLYOLS
CATALYSEURS A BASE DE CYANURES METALLIQUES DOUBLES DESTINES A LA PREPARATION DE POLYETHER-POLYOLS

(30) Priorität: 11.02.1999 DE 19905611
(43) Veröffentlichungstag der Anmeldung: 02.01.2002
(73) Patentinhaber: Bayer MaterialScience AG, 51368 Leverkusen (DE)
(72) Erfinder: HOFMANN, Jörg, D-47829 Krefeld (DE); OOMS, Pieter, D-47800 Krefeld (DE); GUPTA, Pramod, D-50181 Bedburg (DE); SCHÄFER, Walter, D-42799 Leichlingen (DE); LOHRENZ, John, D-51377 Leverkusen (DE)
(86) Internationale Anmeldenummer: PCT/EP2000/000727
(87) Internationale Veröffentlichungsnummer: WO 2000/047649

(56) Entgegenhaltungen:
- EP-A- 0 046 523
- EP-A- 0 892 002
- US-A- 3 829 505

## Beschreibung

Die Erfindung betrifft neue Doppelmetallcyanid (DMC)-Katalysatoren für die Herstellung von Polyetherpolyolen durch Polyaddition von Alkylenoxiden an aktive Wasserstoffatome aufweisende Starterverbindungen.

Doppelmetallcyanid (DMC)-Katalysatoren für die Polyaddition von Alkylenoxiden an aktive Wasserstoffatome aufweisende Starterverbindungen sind bekannt (z.B. aus US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethem mit endständigen Doppelbindungen, sogenannten Monoolen, im Vergleich zu der konventionellen Herstellung von Polyetherpolyolen mittels Alkali-Katalysatoren, wie Alkalihydroxiden. Die so erhaltenen Polyetherpolyole können zu hochwertigen Polyurethanen (z.B. Elastomere, Schäume, Beschichtungen) verarbeitet werden. DMC-Katalysatoren werden gewöhnlich erhalten, indem man eine wässrige Lösung eines Metallsalzes mit der wässrigen Lösung eines Metallcyanidsalzes in Gegenwart eines organischen Komplexliganden, z.B. eines Ethers, umsetzt. In einer typischen Katalysatorpräparation werden beispielsweise wässrige Lösungen von Zinkchlorid (im Überschuss) und Kaliumhexacyanocobaltat gemischt und anschließend Dimethoxyethan (Glyme) zur gebildeten Suspension gegeben. Nach Filtration und Waschen des Katalysators mit wässriger Glyme-Lösung wird ein aktiver Katalysator der allgemeinen Formel

Zn₃[Co(CN)₆]₂ • x ZnCl₂ • yH₂O • z Glyme

erhalten (siehe z.B. EP-A 700 949).

Aus JP-A 4145123, US-A 5 470 813, EP-A 700 949, EP-743 093, EP-A 761 708 und WO 97/40086 sind DMC-Katalysatoren bekannt, die durch Einsatz von tert.-Butanol als organischem Komplexliganden (allein oder in Kombination mit einem Polyether (EP-A 700 949, EP-A 761 708, WO 97/40086)) den Anteil an monofunktionellen Polyethem mit endständigen Doppelbindungen bei der Herstellung von Polyetherpolyolen weiter reduzieren. Darüber hinaus wird durch den Einsatz dieser DMC-Katalysatoren die Induktionszeit bei der Polyadditionsreaktion der Alkylenoxide mit entsprechenden Starterverbindungen reduziert und die Katalysatoraktivität erhöht.

Aufgabe der vorliegenden Erfindung war es, weiter verbesserte DMC-Katalysatoren für die Polyaddition von Alkylenoxiden an entsprechende Starterverbindungen zur Verfügung zu stellen, die eine im Hinblick auf die bislang bekannten Katalysatortypen erhöhte Katalysatoraktivität aufweisen. Dies führt durch Verkürzung der Alkoxylierungszeiten zu einer verbesserten Wirtschaftlichkeit des Herstellprozesses von Polyetherpolyolen. Idealerweise kann durch die erhöhte Aktivität der Katalysator dann in so geringen Konzentrationen (25 ppm oder weniger) eingesetzt werden, dass die sehr aufwendige Katalysatorabtrennung aus dem Produkt nicht mehr notwendig ist, und das Produkt direkt zur Polyurethan-Herstellung verwendet werden kann.

Überraschend wurde jetzt gefunden, dass DMC-Katalysatoren, die eine Gallensäure oder deren Salz, Ester oder Amid als Komplexliganden enthalten, bei der Polyetherpolyol-Herstellung stark erhöhte Aktivität besitzen.

Gegenstand der vorliegenden Erfindung ist daher ein Doppelmetallcyanid (DMC)-Katalysator, enthaltend
a) eine oder mehrere, vorzugsweise eine Doppelmetallcyanid-Verbindung,
b) eine oder mehrere, vorzugsweise eine, Gallensäure oder deren Salz, Ester oder Amid, und
c) einen oder mehrere, vorzugsweise einen, von b) verschiedenen organischen Komplexliganden.

In dem erfindungsgemäßen Katalysator können gegebenenfalls d) Wasser, vorzugsweise 1 bis 10 Gew.-% und/oder e) eines oder mehrere wasserlösliche Metallsalze, vorzugsweise 5 bis 25 Gew.-%, der Formel (I) M(X)ₙ aus der Herstellung der Doppelmetallcyanidverbindungen a) enthalten sein. In Formel (I) wird M ausgewählt aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich, und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Die in den erfindungsgemäßen Katalysatoren enthaltenen Doppelmetallcyanid-Verbindungen a) sind die Reaktionsprodukte wasserlöslicher Metallsalze und wasserlöslicher Metallcyanidsalze.

Zur Herstellung von Doppelmetallcyanid-Verbindungen a) geeignete wasserlösliche Metallsalze besitzen bevorzugt die allgemeine Formel (I) M(X)ₙ, wobei M ausgewählt wird aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III). Besonders bevorzugt sind Zn (II), Fe (II), Co (II) und Ni (II). Die Anionen X sind gleich oder verschieden, vorzugsweise gleich, und werden bevorzugt ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Der Wert für n ist 1, 2 oder 3.

Beispiele geeigneter wasserlöslicher Metallsalze sind Zinkchlorid, Zinkbromid, Zinkacetat, Zinkacetylacetonat, Zinkbenzoat, Zinknitrat, Eisen(II)sulfat, Eisen(II)bromid, Eisen(II)chlorid, Cobalt(II)chlorid, Cobalt(II)thiocyanat, Nickel(II)chlorid und Nickel(II)nitrat. Es können auch Mischungen verschiedener wasserlöslicher Metallsalze eingesetzt werden.

Zur Herstellung von Doppelmetallcyanid-Verbindungen a) geeignete wasserlösliche Metallcyanidsalze besitzen bevorzugt die allgemeine Formel (II) (Y)ₐ M'(CN)_{b} (A)_{c}, wobei M' ausgewählt wird aus den Metallen Fe(II), Fe(III), Co(II), Co(III), Cr(II), Cr(III), Mn(II), Mn(III), Ir(III), Ni(II), Rh(III), Ru(II), V(IV) und V(V). Besonders bevorzugt wird M' ausgewählt aus den Metallen Co(II), Co(III), Fe(II), Fe(III), Cr(III), Ir(III) und Ni(II). Das wasserlösliche Metallcyanidsalz kann eines oder mehrere dieser Metalle enthalten. Die Kationen Y sind gleich oder verschieden, vorzugsweise gleich, und werden aus der Alkalimetallionen und Erdalkalimetallionen enthaltenden Gruppe ausgewählt. Die Anionen A sind gleich oder verschieden, vorzugsweise gleich, und werden ausgewählt aus der Gruppe der Halogenide, Hydroxide, Sulfate, Carbonate, Cyanate, Thiocyanate, Isocyanate, Isothiocyanate, Carboxylate, Oxalate oder Nitrate. Sowohl a, als auch b und c sind ganzzahlig, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0. Beispiele geeigneter wasserlöslicher Metallcyanidsalze sind Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen a), die in den erfindungsgemäßen Katalysatoren enthalten sind, sind Verbindungen der allgemeinen Formel (III)

Mₓ[M'ₓ,(CN)_{y}]_{z} ,

worin M wie in Formel (I) und
M' wie in Formel (II) definiert ist, und
x, x', y und z ganzzahlig und so gewählt sind, dass die Elektronenneutralität der Doppelmetallcyanidverbindung gegeben ist.

Vorzugsweise ist
x = 3,x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US-A 5 158 922 zu entnehmen. Besonders bevorzugt verwendet wird Zinkhexacyanocobaltat(III).

Die in den erfindungsgemäßen DMC-Katalysatoren enthaltenen organischen Komplexliganden c) sind im Prinzip bekannt und ausführlich im Stand der Technik beschrieben (siehe z.B. US-A 5 158 922, US-A 3 404 109, US-A 3 829 505, US-A 3 941 849, EP-A 700 949, EP-A 761 708, JP-A 4145123, US-A 5 470 813, EP-A 743 093 und WO 97/40086). Bevorzugte organische Komplexliganden sind wasserlösliche, organische Verbindungen mit Heteroatomen, wie Sauerstoff, Stickstoff, Phosphor oder Schwefel, die mit der Doppelmetallcyanid-Verbindung a) Komplexe bilden können. Geeignete organische Komplexliganden sind z.B. Alkohole, Aldehyde, Ketone, Ether, Ester, Amide, Harnstoffe, Nitrile, Sulfide und deren Mischungen. Bevorzugte organische Komplexliganden sind wasserlösliche aliphatische Alkohole, wie Ethanol, Isopropanol, n-Butanol, iso-Butanol, sek.-Butanol und tert.-Butanol. Besonders bevorzugt ist tert.-Butanol.

Der organische Komplexligand wird entweder während der Katalysatorpräparation zugegeben oder unmittelbar nach der Ausfällung der Doppelmetallcyanidverbindung a). Gewöhnlich wird der organische Komplexligand im Überschuss eingesetzt.

Die erfindungsgemäßen DMC-Katalysatoren enthalten die Doppelmetallcyanid-Verbindungen a) in Mengen von 25 bis 90 Gew.-%, bevorzugt 30 bis 85 Gew.-%, bezogen auf die Menge des fertigen Katalysators, und die organischen Komplexliganden c) in Mengen von 0,5 bis 30 Gew.-%, bevorzugt 1 bis 25 Gew.-%, bezogen auf die Menge des fertigen Katalysators. Die erfindungsgemäßen DMC-Katalysatoren enthalten üblicherweise 1 bis 80 Gew.-%, bevorzugt 1 bis 40 Gew.-%, bezogen auf die Menge des fertigen Katalysators, einer Gallensäure oder deren Salzes, Esters oder Amids.

Für die Herstellung der erfindungsgemäßen Katalysatoren geeignete Gallensäuren sind C₂₄-Steroid-Carbonsäuren, die Abbauprodukte des Cholesterins sind, und die sich im allgemeinen von der 5β-Cholan-24-säure durch Einführung α-ständiger Hydroxy-Gruppen an C-3, C-6, C-7 und C-12 ableiten.

Bevorzugte Gallensäuren besitzen die allgemeine Formel 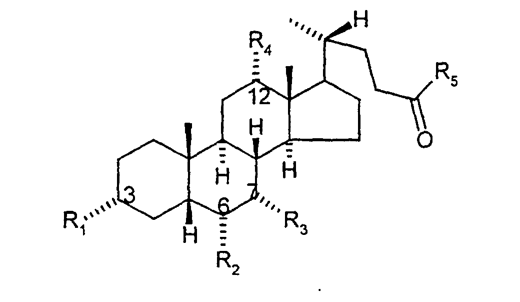 wobei R₁, R₂, R₃ und R₄ unabhängig voneinander H oder OH und R₅ OH, NH-CH₂-COOH, NH-CH₂-CH₂-SO₃H, NH-(CH₂)₃-N⁺(CH₃)₂-CH₂-CHOH-CH₂-SO₃⁻ oder NH-(CH₂)₃-N⁺(CH₃)₂-(CH₂)₃-SO₃⁻ bedeuten.

Geeignet sind die freien Säuren oder deren Salze, bevorzugt Alkali- oder Erdalkalimetallsalze, sowie deren Ester, bevorzugt mit Alkylresten mit 2 bis 30 C-Atomen. und deren Amide, bevorzugt mit Alkylresten oder Sulfoalkyl-, Sulfoalkylaminoalkyl-, Sulfohydroxyalkylaminoalkyl- und Carboxyalkylresten in der Säure- oder Salzform.

Beispiele geeigneter Gallensäuren oder deren Salze, Ester oder Amide sind Cholsäure (3α,7α,12α-Trihydroxy-5β-cholan-24-säure; R₁ = R₃ = R₄ = R₅ = OH, R₂ = H), Cholsäurenatriumsalz (Natriumcholat), Lithiumcholat, Kaliumcholat, Glykolcholsäure (3α,7α,12α-Trihydroxy-5β-cholan-24-säure-N-[carboxymethyl]amid; R₁ = R₃ = R₄ = OH, R₂ = H, R₅ = NH-CH₂-COOH), Natriumglykocholat, Taurocholsäure (3α,7α,12α-Trihydroxy-5β-cholan-24-säure-N-[2-sulfoethyl]amid; R₁ = R₃ = R₄ = OH, R₂ = H, R₅ = NH-CH₂-CH₂-SO₃H), Natriumtaurocholat, Desoxycholsäure (3α,12α-Dihydroxy-5β-cholan-24-säure; R₁ = R₄ = R₅ = OH, R₂ = R₃ = H), Natriumdesoxycholat, Kaliumdesoxycholat, Lithiumdesoxycholat, Glykodesoxycholsäure (3α,12α-Dihydroxy-5β-cholan-24-säure-N-[carboxymethyl]amid; R₁ = R₄ = OH, R₂ = R₃ = H, R₅ = NH-CH₂-COOH), Natriumglykodesoxycholat, Taurodesoxycholsäure (3α,12α-Dihydroxy-5β-cholan-24-säure-N-[2-sulfoethyl]amid; R₁ = R₄ = OH, R₂ = R₃ = H, R₅ = NH-CH₂-CH₂-SO₃H), Natriumtaurodesoxycholat, Chenodesoxycholsäure (3α,7α-Dihydroxy-5β-cholan-24-säure; R₁ = R₃ = R₅ = OH, R₂ = R₄ = H), Natriumchenodesoxycholat, Glykochenodesoxycholsäure (3α,7α-Dihydroxy-5β-cholan-24-säure-N-[carboxymethyl]amid; R₁ = R₃ = OH, R₂ = R₄ = H, R₅ = NH-CH₂-COOH), Natriumglykochenodesoxycholat, Taurochenodesoxycholsäure (3α,7α-Dihydroxy-5β-cholan-24-säure-N-[2-sulfoethyl]amid; R₁ = R₃ = OH, R₂ = R₄ = H, R₅ = NH-CH₂-CH₂-SO₃H), Natriumtaurochenodesoxycholat, Lithocholsäure (3α-Hydroxy-5β-cholan-24-säure; R₁ = R₅ = OH, R₂ = R₃ = R₄ = H), Natriumlithocholat, Kaliumlithocholat, Hyocholsäure (3α,6α,7α-Trihydroxy-5β-cholan-24-säure; R₁ = R₂ = R₃ = R₅ = OH, R₄ = H), Natriumhyocholat, Lithiumhyocholat, Kaliumhyocholat, Hyodesoxycholsäure (3α,6α-Dihydroxy-5β-cholan-24-säure; R₁ = R₂ = R₅ = OH; R₃ = R₄ = H), Natriumhyodesoxycholat, Lithiumhyodesoxycholat, Kaliumhyodesoxycholat, Cholsäuremethylester, Cholsäureethylester, Desoxycholsäureethylester und Hyocholsäuremethylester.

Die Gallensäuren oder deren Salze, Ester oder Amide können einzeln oder in Form von Gemischen eingesetzt werden.

Besonders bevorzugt eingesetzt werden die Natrium-, Lithium- oder Kaliumsalze oder die Methyl- oder Ethylester der Cholsäure, Glykocholsäure, Taurocholsäure. Desoxycholsäure, Glykodesoxycholsäure, Taurodesoxycholsäure, Chenodesoxycholsäure, Glykochenodesoxycholsäure, Taurochenodesoxycholsäure, Lithocholsäure, Hyocholsäure, Hyodesoxycholsäure oder deren Gemische.

Weiter geeignet sind Gallensäuren wie Ursodesoxycholsäure (3α,7β-Dihydroxy-5β-cholan-24-säure), 7-Oxo-lithocholsäure (3α-Hydroxy-7-oxo-5β-cholan-24-säure), Lithocholsäure-3-sulfat (3α-Hydroxy-5β-cholan-24-säure-3-sulfat), nor-Cholsäure und bisnor-Cholsäure, oder deren Salze, Ester oder Amide.

Die Gallensäuren und deren Salze, Ester oder Amide sind allgemein gut bekannt und z.B. ausführlich beschrieben in Nachr. Chem. Tech. Lab. 43 (1995) 1047 und "Römpp-Lexikon Naturstoffe", Stuttgart, New York 1997, S. 248ff.

Es können auch beliebige Mischungen der vorgenannten Gallensäuren oder deren Salze, Ester oder Amide eingesetzt werden.

Die Analyse der Katalysatorzusammensetzung erfolgt üblicherweise mittels Elementaranalyse, Thermogravimetrie und extraktiver Entfernung des Anteils an Gallensäure oder deren Salzes, Esters oder Amids mit anschließender gravimetrischer Bestimmung.

Die erfindungsgemäßen Katalysatoren können kristallin, teilkristallin oder amorph sein. Die Analyse der Kristallinität erfolgt üblicherweise durch Pulverröntgendiffraktometrie.

Bevorzugt sind erfindungsgemäße Katalysatoren enthaltend
a) Zinkhexacyanocobaltat (III),
b) eine Gallensäure oder deren Salz, Ester oder Amid und
c) tert.-Butanol

Die Herstellung der erfindungsgemäßen DMC-Katalysatoren erfolgt üblicherweise in wässriger Lösung durch Umsetzung von α) Metallsalzen, insbesondere der Formel (I) mit Metallcyanidsalzen insbesondere der Formel (II) β) von organischen Komplexliganden c), die von der Gallensäure oder deren Salz, Ester oder Amid verschieden sind und γ) der Gallensäure oder deren Salz, Ester oder Amid.

Bevorzugt werden dabei zunächst die wässrigen Lösungen des Metallsalzes (z.B. Zinkchlorid, eingesetzt im stöchiometrischen Überschuss (mindestens 50 Mol-% bezogen auf das Metallcyanidsalz)) und des Metallcyanidsalzes (z.B. Kaliumhexacyanocobaltat) in Gegenwart des organischen Komplexliganden c) (z.B. tert.-Butanol) umgesetzt, wobei sich eine Suspension bildet, die die Doppelmetallcyanid-Verbindung a) (z.B. Zinkhexacyanocobaltat), Wasser d), überschüssiges Metallsalz e), und den organischen Komplexliganden c) enthält.

Der organische Komplexligand c) kann dabei in der wässrigen Lösung des Metallsalzes und/oder des Metallcyanidsalzes vorhanden sein, oder er wird der nach Ausfällung der Doppelmetallcyanid-Verbindung a) erhaltenen Suspension unmittelbar zugegeben. Es hat sich als vorteilhaft erwiesen, die wässrigen Lösungen und den organischen Komplexliganden c) unter starkem Rühren zu vermischen. Die gebildete Suspension wird üblicherweise anschließend mit der Gallensäure oder deren Salz, Ester oder Amid b) behandelt. Die Gallensäure oder deren Salz, Ester oder Amid b) wird dabei bevorzugt in einer Mischung mit Wasser und organischem Komplexliganden c) eingesetzt.

Anschließend erfolgt die Isolierung des Katalysators aus der Suspension durch bekannte Techniken, wie Zentrifugation oder Filtration. In einer bevorzugten Ausführungsvariante wird der isolierte Katalysator anschließend mit einer wässrigen Lösung des organischen Komplexliganden c) gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden.

Bevorzugt liegt die Menge des organischen Komplexliganden c) in der wässrigen Waschlösung zwischen 40 und 80 Gew.-%, bezogen auf die Gesamtlösung. Weiterhin ist es vorteilhaft, der wässrigen Waschlösung etwas Gallensäure oder deren Salz, Ester oder Amid, bevorzugt im Bereich zwischen 0,5 und 5 Gew.-%, bezogen auf die Gesamtlösung, zuzufügen.

Außerdem ist es vorteilhaft, den Katalysator mehr als einmal zu waschen. Hierzu kann z.B. der erste Waschvorgang wiederholt werden. Bevorzugt ist es aber, für weitere Waschvorgänge nicht wässrige Lösungen zu verwenden, z.B. eine Mischung aus organischem Komplexliganden und Gallensäure oder deren Salz, Ester oder Amid.

Der gewaschene Katalysator wird anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

Ein weiterer Gegenstand der vorliegenden Erfindung ist die Verwendung der erfindungsgemäßen DMC-Katalysatoren in einem Verfahren zur Herstellung von Polyetherpolyolen durch Polyaddition von Alkylenoxiden an aktive Wasserstoffatome aufweisende Starterverbindungen.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann z.B. nur mit einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f. zu entnehmen.

Als aktive Wasserstoffatome aufweisende Starterverbindungen werden vorzugsweise Verbindungen mit (zahlenmittleren) Molekulargewichten von 18 bis 2.000 und 1 bis 8 Hydroxylgruppen eingesetzt. Beispielsweise werden genannt: Ethylenglykol, Diethylenglykol, Triethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke oder Wasser.

Vorteilhafterweise werden solche aktive Wasserstoffatome aufweisende Starterverbindungen eingesetzt, die z.B. durch konventionelle Alkalikatalyse aus den zuvor genannten niedermolekularen Startern hergestellt wurden und oligomere Alkoxylierungsprodukte darstellen mit (zahlenmittleren) Molekulargewichten von 200 bis 2.000.

Die durch die erfindungsgemäßen Katalysatoren katalysierte Polyaddition von Alkylenoxiden an aktive Wasserstoffatome aufweisende Starterverbindungen erfolgt im allgemeinen bei Temperaturen von 20 bis 200°C, bevorzugt im Bereich von 40 bis 180°C, besonders bevorzugt bei Temperaturen von 50 bis 150°C. Die Reaktion kann bei Gesamtdrücken von 0,001 bis 20 bar durchgeführt werden. Die Polyaddition kann in Substanz oder einem inerten, organischen Lösungsmittel, wie Toluol und/oder THF, durchgeführt werden. Die Menge an Lösungsmittel beträgt üblicherweise 10 bis 30 Gew.-%, bezogen auf die Menge des herzustellenden Polyetherpolyols.

Die Katalysatorkonzentration wird so gewählt, dass unter den gegebenen Reaktionsbedingungen eine gute Beherrschung der Polyadditionsreaktion möglich ist. Die Katalysatorkonzentration liegt im allgemeinen im Bereich von 0,0005 Gew.-% bis 1 Gew.-%, bevorzugt im Bereich von 0,001 Gew.-% bis 0,1 Gew.-%, besonders bevorzugt im Bereich von 0,001 bis 0,0025 Gew.-%, bezogen auf die Menge des herzustellenden Polyetherpolyols.

Die zahlenmitteren Molekulargewichte der nach dem erfindungsgemäßen Verfahren hergestellten Polyetherpolyole liegen im Bereich von 500 bis 100.000 g/mol, bevorzugt im Bereich von 1.000 bis 50.000 g/mol, besonders bevorzugt im Bereich von 2.000 bis 20.000 g/mol.

Die Polyaddition kann kontinuierlich oder diskontinuierlich, z.B. in einem Batch- oder im Semibatchverfahren durchgeführt werden.

Die erfindungsgemäßen Katalysatoren können wegen ihrer deutlich erhöhten Aktivität in sehr niedrigen Konzentrationen eingesetzt werden (25 ppm und weniger, bezogen auf die Menge des herzustellenden Polyetherpolyols). Werden die in Gegenwart der erfindungsgemäßen Katalysatoren hergestellten Polyetherpolyole zur Herstellung von Polyurethanen verwendet (Kunststoffhandbuch, Bd. 7, Polyurethane, 3. Aufl., 1993, S. 25-32 und 57-67), kann auf eine Entfernung des Katalysators aus dem Polyetherpolyol verzichtet werden, ohne dass die Produktqualitäten des erhaltenen Polyurethans nachteilig beeinflusst werden.

### Beispiele

### Katalysatorpräparation

### Beispiel A Herstellung eines DMC-Katalysators mit Einsatz von Cholsäurenatriumsalz (Katalysator A).

Zu einer Lösung aus 2 g (6 mmol) Kaliumhexacyanocobaltat in 35 ml destilliertem Wasser gibt man unter starkem Rühren (24.000 U/min) eine Lösung aus 6,2 g (45,75 mmol) Zinkchlorid in 10 ml destilliertem Wasser. Unmittelbar danach wird eine Mischung aus 25 g tert.-Butanol und 25 g destilliertem Wasser zur gebildeten Suspension gegeben und anschließend 10 min stark gerührt (24.000 U/min). Dann wird eine Mischung aus 0,5 g Cholsäurenatriumsalz (Fluka Chemie AG, CH-9471 Buchs), 0,5 g tert.-Butanol und 50 g destilliertem Wasser zugegeben und 3 min gerührt (1.000 U/min). Der Feststoff wird durch eine Filtration isoliert, dann 10 min mit einer Mischung aus 35 g tert.-Butanol, 15 g destilliertem Wasser und 0,5 g Cholsäurenatriumsalz gerührt (10.000 U/min) und erneut filtriert. Abschließend wird noch einmal 10 min mit einer Mischung aus 50 g tert.-Butanol und 0,25 g Cholsäurenatriumsalz gerührt (10.000 U/min). Nach Filtration wird der Katalysator bei 50°C und Normaldruck bis zur Gewichtskonstanz getrocknet.

Ausbeute an getrocknetem, pulverförmigem Katalysator: 2,1 g

Elementaranalyse, Thermogravimetrische Analyse und Extraktion:
Cobalt = 12,6 Gew.-%, Zink = 27,3 Gew.-%, tert.-Butanol = 10,9 Gew.-%, Cholsäurenatriumsalz = 4,3 Gew.-%

### Beispiel B Herstellung eines DMC-Katalysators mit Einsatz von Hyodesoxycholsäurenatriumsalz (Katalysator B).

Es wurde verfahren wie in Beispiel A, jedoch wurde Hyodesoxycholsäurenatriumsalz (Firma Sigma-Aldrich Chemie GmbH, D-82041 Deisenhofen) anstelle von Cholsäurenatriumsalz aus Beispiel A eingesetzt.

Ausbeute an getrocknetem, pulverförmigem Katalysator: 2,0 g

Elementaranalyse, Thermogravimetrische Analyse und Extraktion:
Cobalt = 13,8 Gew.-%, Zink = 28,3 Gew.-%, tert.-Butanol = 7,3 Gew.-%, Hyodesoxycholsäurenatriumsalz = 6,2 Gew.-%

### Beispiel C (Vergleichsbeispiel) Herstellung eines DMC-Katalysators unter Einsatz von tert.-Butanol ohne Gallensäure oder deren Salz, Ester oder Amid (Katalysator C, Synthese gemäß JP-A 4145123)

Zu einer Lösung aus 4 g (12 mmol) Kaliumhexacyanocobaltat in 75 ml destilliertem Wasser gibt man unter starkem Rühren (24.000 U/min) eine Lösung aus 10 g (73,3 mmol) Zinkchlorid in 15 ml destilliertem Wasser. Unmittelbar danach wird eine Mischung aus 50 g tert.-Butanol und 50 g destilliertem Wasser zur gebildeten Suspension gegeben und anschließend 10 min stark gerührt (24.000 U/min). Der Feststoff wird durch eine Filtration isoliert, dann 10 min mit 125 g einer Mischung aus tert.-Butanol und destilliertem Wasser ( 70/30; w/w ) gerührt (10.000 U/min) und erneut filtriert. Abschließend wird noch einmal 10 min mit 125 g tert.-Butanol gerührt (10.000 U/min). Nach Filtration wird der Katalysator bei 50°C und Normaldruck bis zur Gewichtskonstanz getrocknet.

Ausbeute an getrocknetem, pulverförmigem Katalysator: 3,08 g
Elementaranalyse:
Cobalt = 13,6 Gew.-%, Zink = 27,4 Gew.-%, tert.-Butanol = 14,2 Gew.-%,

### Herstellung von Polyetherpolyolen

### Allgemeine Durchführung

In einem 500 ml Druckreaktor werden 50 g Polypropylenglykol-Starter (Molekulargewicht = 1.000 g/mol) und 3 - 5 mg Katalysator (15 - 25 ppm, bezogen auf die Menge des herzustellenden Polyetherpolyols) unter Schutzgas (Argon) vorgelegt und unter Rühren auf 105°C aufgeheizt. Anschließend wird Propylenoxid (ca. 5 g) auf einmal zudosiert, bis der Gesamtdruck auf 2,5 bar angestiegen ist. Weiteres Propylenoxid wird erst dann wieder zudosiert, wenn ein beschleunigter Druckabfall im Reaktor beobachtet wird. Dieser beschleunigte Druckabfall zeigt an, dass der Katalysator aktiviert ist. Anschließend wird das restliche Propylenoxid (145 g) kontinuierlich bei einem konstanten Gesamtdruck von 2,5 bar zudosiert. Nach vollständiger Propylenoxid-Dosierung und 2 Stunden Nachreaktionszeit bei 105°C werden flüchtige Anteile bei 90°C (1 mbar) abdestilliert und anschließend auf Raumtemperatur abgekühlt.

Die erhaltenen Polyetherpolyole wurden durch Ermittlung der OH-Zahlen, der Doppelbindungsgehalte und der Viskositäten charakterisiert.

Der Reaktionsverlauf wurde anhand von Zeit-Umsatz-Kurven (Propylenoxid-Verbrauch [g] vs. Reaktionszeit [min]) verfolgt. Aus dem Schnittpunkt der Tangente an den steilsten Punkt der Zeit-Umsatz-Kurve mit der verlängerten Basislinie der Kurve wurde die Induktionszeit bestimmt. Die für die Katalysatoraktivität maßgeblichen Propoxylierungszeiten entsprechen dem Zeitraum zwischen Katalysatoraktivierung (Ende der Induktionsperiode) und dem Ende der Propylenoxid-Dosierung. Die Gesamtreaktionszeit ist die Summe aus Induktions- und Propoxylierungszeit.

### Beispiel 1 Herstellung von Polyetherpolyol mit Katalysator A (25 ppm)

| | | |
|---|---|---|
| Induktionszeit | | 217 min |
| Propoxylierungszeit | | 33 min |
| Gesamtreaktionszeit | | 250 min |
| Polyetherpolyol | OH-Zahl (mg KOH/g) | 29,6 |
| | Doppelbindungsgehalt (mMol/kg) | 6 |
| | Viskosität 25°C (mPas) | 855 |

### Beispiel 2 Herstellung von Polyetherpolyol mit Katalysator A (15 ppm)

| | | |
|---|---|---|
| Induktionszeit | | 387 min |
| Propoxylierungszeit | | 168 min |
| Gesamtreaktionszeit | | 555 min |
| Polyetherpolyol | OH-Zahl (mg KOH/g) | 30,1 |
| | Doppelbindungsgehalt (mMol/kg) | 6 |
| | Viskosität 25°C (mPas) | 993 |

Ohne Entfernung des Katalysators beträgt der Metallgehalt im Polyol: Zn = 4 ppm, Co = 2 ppm.

### Beispiel 3 Herstellung von Polyetherpolyol mit Katalysator B (25 ppm)

| | | |
|---|---|---|
| Induktionszeit | | 371 min |
| Propoxylierungszeit | | 40 min |
| Gesamtreaktionszeit | | 411 min |
| Polyetherpolyol | OH-Zahl (mg KOH/g) | 30,2 |
| | Doppelbindungsgehalt (mMol/kg) | 6 |
| | Viskosität 25°C (mPas) | 902 |

### Beispiel 4 (Vergleichsbeispiel)

Katalysator C (15 ppm) zeigt unter den oben beschriebenen Reaktionsbedingungen auch nach 14 h Induktionszeit noch keine Aktivität.

Bei Einsatz von 50 ppm Katalysator C betrug die Induktionszeit ca. 9 h. Die Propoxylierungszeit betrug mehr als 12 Stunden, wobei im Laufe der Reaktion Katalysatordesaktivierung auftrat.

Beispiele 1-3 zeigen, dass die neuen, erfindungsgemäßen DMC-Katalysatoren aufgrund ihrer deutlich erhöhten Aktivität bei der Polyetherpolyol-Herstellung in so geringen Konzentrationen eingesetzt werden können, dass auf eine Abtrennung des Katalysators aus dem Polyol verzichtet werden kann.

## Patentansprüche

1. Doppelmetallcyanid (DMC)-Katalysator enthaltend
a) eine oder mehrere Doppelmetallcyanid-Verbindungen,
b) eine oder mehrere Gallensäuren oder deren Salze, Ester oder Amide, und
c) einen oder mehrere, von b) verschiedene, organische Komplexliganden.

2. DMC-Katalysator nach Anspruch 1, zusätzlich enthaltend d) Wasser und/oder e) wasserlösliche Metallsalze der Formel M(X)ₙ, wobei M ausgewählt ist aus den Metallen Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) und Cr (III), X gleiche oder verschiedene Anionen bedeutet und n den Wert 1, 2 oder 3 hat.

3. DMC-Katalysator nach Anspruch 1 oder 2, worin die Doppelmetallcyanid-Verbindung a) Zinkhexacyanocobaltat(III) ist.

4. DMC-Katalysator nach einem der Ansprüche 1 bis 3, worin der organische Komplexligand c) tert.-Butanol ist.

5. DMC-Katalysator nach einem der Ansprüche 1 bis 4, enthaltend 1 bis 80 Gew.-% einer Gallensäure oder deren Salzes, Esters oder Amids.

6. DMC-Katalysator nach einem der Ansprüche 1 bis 5, worin die Gallensäure die allgemeine Formel 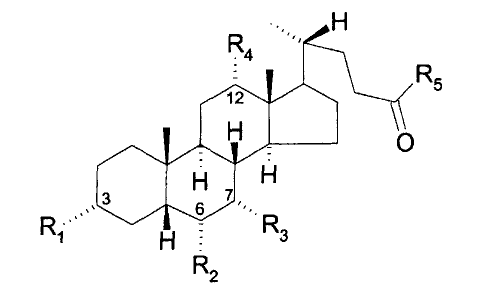 besitzt, wobei
R₁, R₂, R₃, R₄ unabhängig voneinander H oder OH und
R₅ OH, NH-CH₂-CH₂-SO₃H, NH-(CH₂)₃-N⁺(CH₃)₂-(CH₂)₃-SO₃, NH-(CH₂)₃-N⁺(CH₃)₂-CH₂-CHOH-CH₂-SO₃⁻oder NH-CH₂₋-COOH bedeuten.

7. DMC-Katalysator nach einem der Ansprüche 1 bis 6, worin der Katalysator als Gallensäuresalz die Natrium-, Lithium- oder Kaliumsalze der Cholsäure, Glykocholsäure, Taurocholsäure, Desoxycholsäure, Glykodesoxycholsäure, Taurodesoxycholsäure, Chenodesoxycholsäure, Glykochenodesoxycholsäure, Taurochenodesoxycholsäure, Lithocholsäure, Hyocholsäure, Hyodesoxycholsäure oder deren Gemische enthält.

8. Verfahren zur Herstellung eines DMC-Katalysators nach einem der Ansprüche 1 bis 7, enthaltend die Schritte:
i) Umsetzung in wäßriger Lösung von
α) Metallsalzen mit Metallcyanidsalzen
β) organischen Komplexliganden, die von Gallensäuren oder deren Salzen, Estern oder Amiden verschieden sind, und
γ) Gallensäuren oder deren Salzen, Ester oder Amiden,
ii) Isolieren, Waschen und Trocknen des in Schritt i) erhaltenen Katalysators.

9. Verfahren zur Herstellung von Polyetherpolyolen durch Polyaddition von Alkylenoxiden an aktive Wasserstoffatome aufweisenden Starterverbindungen in Gegenwart eines oder mehrerer DMC-Katalysatoren nach einem der Ansprüche 1 bis 7.

10. Verwendung eines oder mehrerer DMC-Katalysatoren nach einem der Ansprüche 1 bis 7, zur Herstellung von Polyetherpolyolen durch Polyaddition von Alkylenoxiden an aktive Wasserstoffatome aufweisende Starterverbindungen.

## Claims

1. A double metal cyanide (DMC) catalyst containing
a) one or more double metal cyanide compounds,
b) one or more bile acids or their salts, esters or amides, and
c) one or more organic complex ligands which differ from b).

2. A DMC catalyst according to claim 1, also containing d) water and/or e) water-soluble metal salts of the formula M(X)ₙ, wherein M is selected from the metals Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II) and Cr(III), X represents identical or different anions, and the value of n is 1, 2 or 3.

3. A DMC catalyst according to claim 1 or 2, in which the double metal cyanide compound a) is zinc hexacyanocobaltate(III).

4. A DMC catalyst according to any one of claims 1 to 3, in which the organic complex ligand c) is tert-butanol.

5. A DMC catalyst according to any one of claims 1 to 4, containing 1 to 80 wt.% of a bile acid or its salt, ester or amide.

6. A DMC catalyst according to any one of claims 1 to 5, in which the bile acid has the general formula 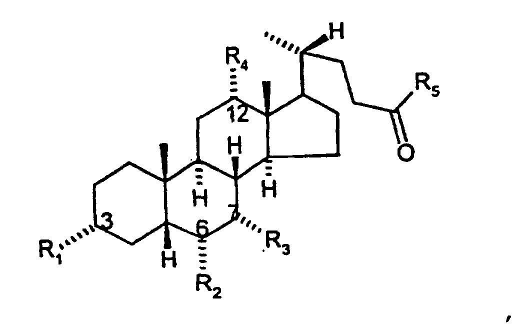 wherein
R₁, R₂, R₃, R₄, independently, represent H or OH and
R₅ represents OH, NH-CH₂-CH₂-SO₃H, NH-(CH₂)₃-N⁺(CH₃)₂-(CH₂)₃-SO₃, NH-(CH₂)₃-N⁺(CH₃)₂-CH₂-CHOH-CH₂-SO₃⁻ or NH-CH₂-COOH.

7. A DMC catalyst according to any one of claims 1 to 6, in which the catalyst contains, as a bile acid salt, the sodium, lithium or potassium salts of cholic acid, glycocholic acid, taurocholic acid, deoxycholic acid, glycodeoxycholic acid, taurodeoxycholic acid, chenodeoxycholic acid, glycochenodeoxycholic acid, taurochenodeoxycholic acid, lithocholic acid, hyocholic acid, hyodeoxycholic acid or mixtures thereof.

8. A process for preparing a DMC catalyst according to any one of claims 1 to 7, comprising the steps:
i) Reaction in aqueous solution of
α) metal salts with metal cyanide salts
β) organic complex ligands, which differ from bile acids or their salts, esters or amides, and
γ) bile acids or their salts, esters or amides,
ii) isolation, washing and drying of the catalyst obtained in step i).

9. A process for preparing polyetherpolyols by the polyaddition of alkylene oxides to starter compounds which contain active hydrogen atoms in the presence of one or more DMC catalysts according to any one of claims 1 to 7.

10. The use of one or more DMC catalysts according to any one of claims 1 to 7, to prepare polyetherpolyols by the polyaddition of alkylene oxides to starter compounds which contain active hydrogen atoms.

## Revendications

1. Catalyseur de cyanure métallique double (DMC) contenant :
a) un ou plusieurs composés de cyanure métallique double,
b) un ou plusieurs acides biliaires ou leurs sels, esters ou amides, et
c) un ou plusieurs ligands complexants organiques différents de b).

2. Catalyseur DMC suivant la revendication 1, contenant en outre d) de l'eau et/ou e) un sel métallique soluble dans l'eau de la formule M(X)ₙ, où M est choisi parmi les métaux Zn (II), Fe (II), Ni (II), Mn (II), Co (II), Sn (II), Pb (II), Fe (III), Mo (IV), Mo (VI), Al (III), V (V), V (IV), Sr (II), W (IV), W (VI), Cu (II) et Cr (III), X représente des anions identiques ou différents et n a la valeur 1, 2 ou 3.

3. Catalyseur DMC suivant la revendication 1 ou 2, où le composé de cyanure métallique double a) est l'hexacyanocobaltate de zinc (III).

4. Catalyseur DMC suivant l'une quelconque des revendications 1 à 3, où le ligand complexant organique c) est le t-butanol.

5. Catalyseur DMC suivant l'une quelconque des revendications 1 à 4, contenant 1 à 80% en poids d'un acide biliaire ou de son sel, ester ou amide.

6. Catalyseur DMC suivant l'une quelconque des revendications 1 à 5, où l'acide biliaire possède la formule générale : 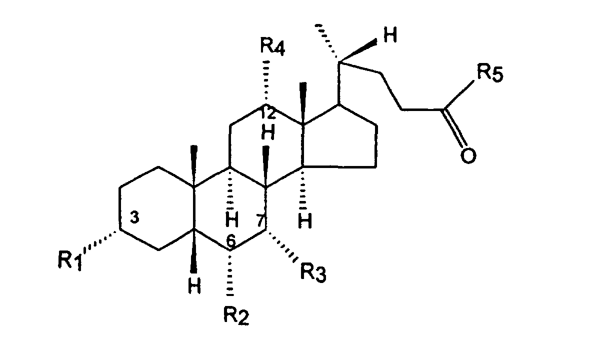 où
R₁, R₂, R₃ et R₄ signifient indépendamment l'un de l'autre, H ou OH, et
R₅ signifie OH, NH-CH₂-CH₂-SO₃H, NH-(CH₂)₃-N⁺(CH₃)₂CH₂-CHOH-CH₂-SO₃⁻ ou NH-(CH₂)₃-N⁺(CH₃)₂(CH₂)₃-SO₃⁻ ou NH-CH₂-COOH.

7. Catalyseur DMC suivant l'une quelconque des revendications 1 à 6, où le catalyseur contient comme sel d'acide biliaire, le sel de sodium, de lithium ou de potassium de l'acide cholique, de l'acide glycocholique, de l'acide taurocholique, de l'acide désoxycholique, de l'acide glycodésoxycholique, de l'acide taurodésoxycholique, de l'acide chénodésoxycholique, de l'acide glycochénodésoxycholique, de l'acide taurochénodésoxycholique, de l'acide lithocholique, de l'acide hyocholique, de l'acide hyodésoxycholique ou de leurs mélanges.

8. Procédé de préparation d'un catalyseur DMC selon l'une quelconque des revendications 1 à 7, contenant les étapes de:
i) réaction en solution aqueuse de
α) sels métalliques avec des sels de cyanure métallique,
β) ligands complexants organiques c), qui sont différents de l'acide biliaire ou de son sel, ester ou amide, et
γ) l'acide biliaire ou son sel, ester ou amide,
ii) isolement, lavage et séchage du catalyseur obtenu à l'étape i).

9. Procédé de préparation de polyéther-polyols par polyaddition d'oxydes d'alcoylène sur des composés starters présentant des atomes d'hydrogène actifs, en présence d'un ou de plusieurs catalyseurs DMC selon l'une quelconque des revendications 1 à 7.

10. Utilisation d'un ou de plusieurs catalyseurs DMC selon l'une quelconque des revendications 1 à 7, pour la préparation de polyéther-polyols par polyaddition d'oxydes d'alcoylène sur des composés starters présentant des atomes d'hydrogène actifs.
